Europäisches Patentamt

European Patent Office

Office européen des brevets

(19)

(11) Veröffentlichungsnummer: **0 021 413**
**B1**

(12) # EUROPÄISCHE PATENTSCHRIFT

(45) Veröffentlichungstag der Patentschrift :
22.06.83

(51) Int. Cl.³ : **H 04 M   1/08**

(21) Anmeldenummer : **80103578.3**

(22) Anmeldetag : **25.06.80**

(54) **Gabelumschalter für Fernsprechapparate.**

(30) Priorität : **02.07.79 DE 2926683**

(43) Veröffentlichungstag der Anmeldung :
**07.01.81 Patentblatt 81/01**

(45) Bekanntmachung des Hinweises auf die Patenterteilung : **22.06.83 Patentblatt 83/25**

(84) Benannte Vertragsstaaten :
**AT IT NL**

(56) Entgegenhaltungen :
**DE A 2 506 167**
**DE A 2 522 109**
**DE B 1 134 111**
**DE B 1 151 020**

(73) Patentinhaber : **Telefonbau und Normalzeit GmbH**
**Mainzer Landstrasse 128-146 Postfach 4432**
**D-6000 Frankfurt (Main) (DE)**

(72) Erfinder : **Barkow, Helmut**
**Berliner Strasse 42**
**Steinbach/Taunus (DE)**   ·
Erfinder : **Frank, Karl**
**Waldecker Strasse 14**
**D-6000 Frankfurt (Main) (DE)**

EP 0 021 413 B1

## Gabelumschalter für Fernsprechapparate

Die Erfindung betrifft einen Gabelumschalter für Fernsprechapparate, bei dem mindestens ein Kontaktfedersatz in einem Gehäuse untergebracht ist, bei dem eine bewegliche Mittelfeder als Sprungfeder ausgebildet ist und bei dem die Betätigung der Sprungfeder über einen Betätiger erfolgt, der mit einer Schaltwippe verbunden ist.

Bei den gebräuchlichen Gabelumschaltern ist die Schaltgeschwindigkeit der Kontakte von der Betätigungsgeschwindigkeit abhängig. Eine langsame Betätigung führt danach auch zu einer langsamen, schleichenden Kontaktgabe, die sich nachteilig auf die Lebensdauer der Kontakte auswirkt. Insbesondere beim Schalten von Gleichströmen ist eine hohe Schaltgeschwindigkeit beim Öffnen und Schließen wichtig, um den Abbrand und die Materialwanderung auf ein Minimum zu beschränken. Bei hohen Schaltgeschwindigkeiten müssen aber auch große Prellzeiten, die dabei auftreten können, vermieden werden.

Es sind bereits als Sprungschalter ausgebildete Schalter bekannt, die mit einer C-förmigen Sprungfeder ausgerüstet sind. Sie bestehen aus vielen Einzelteilen, wobei diese und auch die C-Feder einzeln in ein Gehäuse eingelegt und verbunden werden, wodurch eine aufwendige Montage notwendig ist. Auch kann sich bei einer C-Feder der Kontaktdruck in den beiden Schaltstellungen leicht unterschiedlich verändern.

Bekannt ist bereits (DE-AS 11 51 020) ein Gabelumschalter für Fernsprechapparate, bei dem Kontaktfedersätze in einem Gehäuse untergebracht sind und bei dem die bewegliche Mittelfeder als C-förmige Sprungfeder ausgebildet ist. Die Betätigung der Sprungfeder erfolgt dort über ein Betätigungsorgan, das mit einer Schaltwippe verbunden ist. Auch dieser Gabelumschalter weist die bei den Sprungschaltern mit C-förmiger Sprungfeder angeführten Nachteile auf.

Der Erfindung liegt die Aufgabe zugrunde, einen Gabelumschalter der eingangs genannten Art so auszubilden, daß der Kontaktdruck in den beiden Schaltstellungen sich nicht unterschiedlich ändern kann, der aus wenigen Einzelteilen besteht, die ohne zusätzliche Verbindungselemente zusammengefügt sind, und der durch diesen einfachen Aufbau eine rationelle und kostengünstige Montage ermöglicht, die auch halbautomatisch oder vollautomatisch durchgeführt werden kann.

Diese Aufgabe wird erfindungsgemäß dadurch gelöst, daß die Sprungfeder rahmenförmig ausgebildet ist und in der Mitte zwei nach außen in zwei entgegengesetzte Richtungen gewölbte und an ihrem unteren Ende verbundene Federzungen aufweist, wobei das untere Ende in die Lagernut des Betätigers eingreift, und daß der Betätiger an der den Federzungen abgewandten Seite eine Nut für seine Lagerung auf der Sprungfeder besitzt. Insbesondere durch diese Ausbildung der Sprungfeder wird ein gleichmäßiges Schaltverhalten über lange Zeit erreicht.

Zweckmäßigerweise sind mehrere Sprungfedern und die äußeren Kontaktfedern jeweils kammförmig über einen vorzugsweise nach der Montage abtrennbaren Stanzstreifen miteinander verbunden und auch der Betätiger ist als kammförmiges Kunststoffteil ausgebildet. Vorteile ergeben sich auch dadurch, daß die Sprungfedern und die äußeren Kontaktfedern in Kammern eines Sockelteiles formschlüssig geführt sind, wobei die äußeren Kontaktfedern eine Vorspannung besitzen und an der Innenwand des Sockelteiles anliegen und nach außen herausgebogene Nasen aufweisen, die in entsprechende Aussparungen des Sockels einrasten. Die Erfindung ist anhand eines Ausführungsbeispiels in der Zeichnung dargestellt und wird anschließend näher beschrieben.

Es zeigen :

Figur 1 den Gabelumschalter gemäß der Erfindung in der Vorderansicht.

Figur 2 den Gabelumschalter in der Seitenansicht im Schnitt.

Figur 3 den Gabelumschalter in der Draufsicht, teilweise im Schnitt.

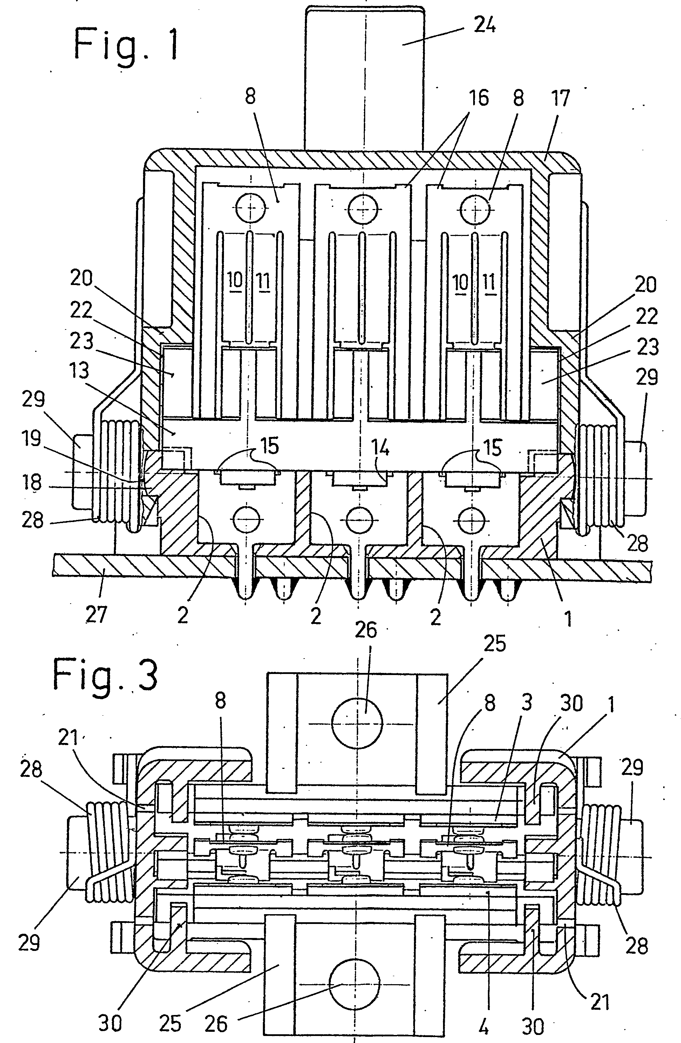

Der in den Fig. 1 bis 3 dargestellte Gabelumschalter ist auf einem Sockelteil 1 aufgebaut. Im Unterteil dieses Sockelteiles sind Kammern 2 angebracht, in denen die Kontaktfedern formschlüssig geführt sind. Die äußeren Kontaktfedern 3 und 4 sind jeweils zu dritt mit einem Stanzstreifen verbunden und werden so von oben in die äußeren Kammern 2 eingesetzt. Diese Kontaktfedern 3 und 4 besitzen nach außen herausgebogene Nasen 5 mit denen sie in Aussparungen 6 des Sockelteiles einrasten. Anschließend wird bei 7 der gemeinsame Stanzstreifen abgetrennt, so daß Einzelfedern entstehen. Die äußeren Kontaktfedern 3 und 4 besitzen eine Vorspannung und liegen mit dieser an der Innenwand des Sockelteiles an.

Auch die Sprungfedern 8 sind zuerst oben durch einen gemeinsamen Stanzstreifen verbunden. Jede einzelne Sprungfedern 8 ist in ihrem oberen Teil rahmenförmig ausgebildet und besitzt in ihrer Mitte zwei nach außen in entgegengesetzte Richtungen beim Stanzen ausgewölbte und an ihrem unteren Ende 9 verbunden gebliebene Zungen 10 und 11. Mit diesem Ende greifen sie in die Lagernuten 12 eines Betätigers 13 ein.

Auch der Betätiger 13 ist als kammförmiges Kunststoffteil ausgebildet und ist mit der unteren Lagernut 14 jeweils auf der Kante 15 der Sprungfedern 8 gelagert. Der Abstand zwischen den Lagernuten 12 und 14 ist so gewählt, daß er etwas größer ist, als der Abstand zwischen dem Ende 9 der Federzungen 10, 11 und der Kante 15 der Sprungfedern. Der Betätiger 13 wird mit seinen Lagernuten 12 und 14 zwischen die Kante 15 der Sprungfeder 8 und das Ende 9 der Federzungen eingesteckt, anschließend bei 16 der Stanzstreifen, der die Sprungfedern 8 zusammenhielt, abgetrennt und das so gebildete Teil des Betätigers 13 mit den Sprungfedern 8 in die Kammern 2 im Sokkelteil 1 von oben eingesteckt.

Anschließend wird eine Schaltwippe 17 die gehäuseförmig ausgebildet ist, über das Sockelteil 1 geschoben. Zur Lagerung ist das Sockelteil 1 mit Zapfen 18 versehen, die beim Aufschieben in entsprechende Bohrungen 19 in der Schaltwippe eingreifen. Damit die Seitenwände 20 der Schaltwippe 17 beim Aufschieben besser auffedern, sind in diesen Schlitze 21 angebracht. Um ein Eindringen von Staub durch diese Schlitze 21 zu vermeiden, sind an der Schaltwippe 17 Wandungen 30 angespritzt, die diese Schlitze zumindest teilweise abdecken. Die unteren Lagerstellen 14, 15 der Sprungfedern sind in der Achse der Lagerstellen 18, 19 der Schaltwippe 17 angeordnet.

Um die Schaltwippe 17 mit dem Betätiger 13 formschlüssig zu verbinden, sind in der Schaltwippe 17 Nuten 22 angebracht, in die beim Aufstecken der Schaltwippe auf das Sockelteil 1 Finger 23 des Betätigers eingreifen. Die Schaltwippe 17 ist mit einem Betätigunghebel 24 versehen.

Um die Seitenwände des Sockelteiles 1 zu versteifen, sind diese mit Stützwänden 25 versehen. In ihrem unteren Teil tragen die Stützwände 25 Bohrungen 26 zur Befestigung auf einer Grundplatte 27, die beispielsweise als Leiterplatte ausgebildet ist.

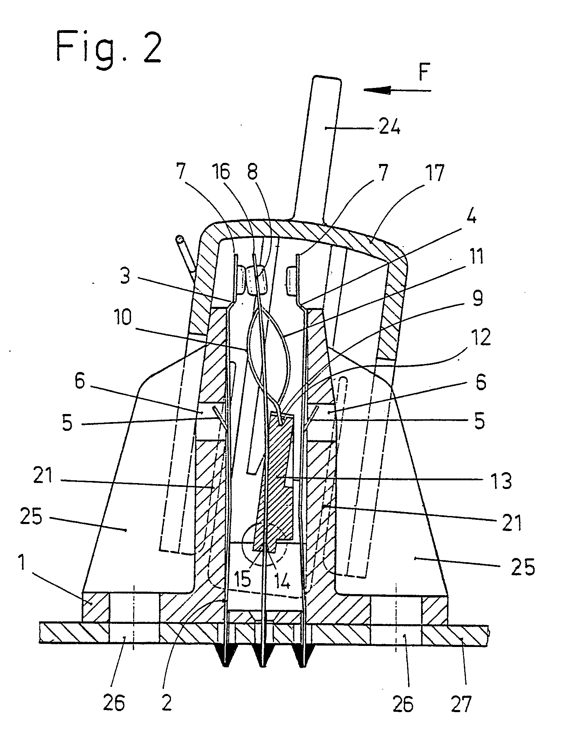

Beim Betätigen des Gabelumschalters durch einen Handapparat (Pfeil F in Fig. 2) dreht sich die Schaltwippe 17 mit dem Betätiger 13 nach links. Die Sprungfedern 8 liegen dabei mit ihren Kontaken zunächst noch an den linken Kontaktfedern 7 an. Ist die Mittellage leicht überschritten, springt die Sprungfeder 8 plötzlich zur anderen Seite und kommt zur Anlage an die rechten Kontaktfedern 7. Die Schaltzeit beträgt nur wenige Millisekunden.

Bei einer Betätigung in der dem Pfeil entgegengesetzten Richtung erfolgt der gleiche Schaltvorgang in umgekehrter Richtung. Um diesen Schaltvorgang beim Abnehmen des Handapparates auszuführen, ist eine Torsionsfeder 28 vorgesehen. Diese ist auf Zapfen 29 der Schaltwippe 17 gelagert und dreht die Schaltwippe wieder nach rechts.

Da die Federzungen 10, 11 der Sprungfedern 8 völlig symetrisch ausgebildet sind, bleibt auch nach vielen Schaltspielen die Kontaktkraft in beiden Schaltstellungen gleich.

## Ansprüche

1. Gabelumschalter für Fernsprechapparate, bei dem mindestens ein Kontaktfedersatz (3, 4, 8) in einem Gehäuse (1) untergebracht ist, bei dem eine bewegliche Mittelfeder (8) als Sprungfeder ausgebildet ist und bei dem die Betätigung der Sprungfeder (8) über einen Betätiger (13) erfolgt, der mit einer Schaltwippe (17) verbunden ist, dadurch gekennzeichnet, daß die Sprungfeder (8) rahmenförmig ausgebildet ist und in der Mitte zwei nach außen in zwei entgegengesetzte Richtungen gewölbte und an ihrem unteren Ende (9) verbundene Federzungen (10, 11) aufweist, wobei das untere Ende (9) in die Lagernut (12) des Betätigers (13) eingreift, und daß der Betätiger (13) an der den Federzungen (10, 11) abgewandten Seite eine Nut (14) für seine Lagerung auf der Sprungfeder (8, 15) besitzt.

2. Gabelumschalter nach Anspruch 1, dadurch gekennzeichnet, daß mehrere Sprungfedern (8) und die äußeren Kontaktfedern (7) jeweils kammförmig über einen vorzugsweise nach der Montage abtrennbaren Stanzstreifen miteinander verbunden sind und daß auch der Betätiger (13) als kämmförmiges Kunststoffteil ausgebildet ist.

3. Gabelumschalter nach Anspruch 1 und 2, dadurch gekennzeichnet, daß die Sprungfedern (8) und die äußeren Kontaktfedern (7) in Kammern (2) eines Sockelteiles (1) formschlüssig geführt sind, wobei die äußeren Kontaktfedern (7) eine Vorspannung besitzen und an der Innenwand des Sockelteiles (1) anliegen und nach außen herausgebogene Nasen (5) aufweisen, die in entsprechende Aussparungen (6) des Sockels (1) einrasten.

4. Gabelumschalter nach Anspruch 1 bis 3, dadurch gekennzeichnet, daß die Schaltwippe (17) mit Bohrungen (19) versehen ist und der Sockel (1) in diese eingreifende Zapfen (18) trägt, wobei die Seitenwände (20) der Schaltwippe (17) federnd ausgebildet sind.

5. Gabelumschalter nach Anspruch 1 bis 4, dadurch gekennzeichnet, daß die Nuten (22) in der Schaltwippe (17) angebracht sind, in die entsprechende Finger (23) des Betätigers (13) beim Aufstecken der Schaltwippe (17) auf das Sockelteil (1) formschlüssig eingreifen.

6. Gabelumschalter nach Anspruch 1 bis 4, dadurch gekennzeichnet, daß die unteren Lagerstellen (14, 15) der Sprungfedern (8) in der Achse der Lagerstellen (18, 19) der Schaltwippe (17) angebracht sind.

7. Gabelumschalter nach Anspruch 1 bis 4, dadurch gekennzeichnet, daß das Sockelteil (1) mit Stützwänden (25) zur Versteifung der Seitenwände versehen ist und daß die Stützwände (25) in ihrem unteren Teil Bohrungen (26) zur Befestigung auf einer vorzugsweise als Leiterplatte ausgebildeten Grundplatte (27) tragen.

8. Gabelumschalter nach Anspruch 1 und 4, dadurch gekennzeichnet, daß die Schaltwippe (17) mit Zapfen (29) ausgestattet ist, auf der eine Torsionsfeder (28) für die Rückstellung der Schaltwippe angebracht ist.

9. Gabelumschalter nach Anspruch 1 und 4, dadurch gekennzeichnet, daß an der Schaltwippe (17) Wandungen (30) angespitzt sind, die die zur Federung der Seitenwände (20) angebrachten Schlitze (21) zumindest teilweise abdecken.

## Claims

1. Cradle switch for telephone instruments, with at least one contact spring set (3, 4, 8) accommodated in a housing (1), in which a moving middle spring (8) is fitted out as an elastic spring and in which the operation of the elastic spring (8) is effected by an actuator (13) which is connected with a switching lever (17), characterized by the fact that the elastic spring (8) is fitted out like a frame and in the middle features two spring tongues (10, 11) arched outwards in two opposite directions and linked at their lower ends (9), whereby each lower end (9) engages in the bedding slot (12) of the actuator (13), and the actuator (13) has a slot (14) on the side facing the spring tongues (10, 11) for its bedding on the elastic spring (8, 15).

2. Cradle switch according to claim 1, characterized by the fact that several elastic springs (8) and the external contact springs (7) are interconnected in a comb-like way via a punch strip, preferably to be cut off after assembling, and also the actuator (13) is fitted out as a comb-like plastic part.

3. Cradle switch according to claims 1 and 2, characterized by the fact that the elastic springs (8) and the external contact springs (7) are form-closed brought up to chambers (2) of a base part (1), whereby the external contact springs (7) are pretensed and sit close to the internal wall of the base part (1) and feature lugs (5) bent outwards which catch into corresponding recesses (6) of the base (1).

4. Cradle switch according to claims 1 to 3, characterized by the fact that the switching lever (17) is provided with boreholes (19), and the base (1) bears pegs (18) latching into said boreholes, and the side walls (20) of the switching lever (17) are flexible.

5. Cradle switch according to claims 1 to 4, characterized by the fact that the slots (22) are provided in the switching lever (17) into which corresponding fingers (23) of the actuator (13) form-closed engage when the switching lever (17) is plugged to the base part (1).

6. Cradle switch according to claims 1 to 4, characterized by the fact that the lower bearings (14, 15) of the elastic springs (8) are provided in the axis of the bearings (18, 19) of the switching lever (17).

7. Cradle switch according to claims 1 to 4, characterized by the fact that the base part (1) is provided with supporting walls (25) for stiffening the side walls and that the supporting walls (25) have boreholes (26) in their lower part for mounting to a baseplate (27) preferably fitted out as a circuit board.

8. Cradle switch according to claims 1 and 4, characterized by the fact that the switching lever (17) is provided with pegs (29) on which a torsion spring (28) for resetting the switching lever is fitted.

9. Cradle switch according to claims 1 and 4, characterized by the fact that walls (30) are molded to the switching lever (17) to cover at least in part the slots (21) provided for making the side walls (20) flexible.

## Revendications

1. Crochet commutateur pour postes téléphoniques dans lequel un jeu de ressorts de contact (3, 4, 8) au moins est logé à l'intérieur d'un boîtier (1), dans lequel un ressort central mobile (8) est construit sous forme de ressort à boudin et dans lequel l'actionnement du ressort à boudin (8) s'effectue par l'intermédiaire d'un actionneur (13) relié à une bascule de commutation (17), caractérisé en ce que le ressort à boudin (8) est construit en forme de cadre et possède en son milieu deux lames à ressort (10, 11) cintrées vers l'extérieur en deux directions opposées et raccordées en leurs extrémités inférieures (9), celles-ci (9) venant en prise dans les rainures de positionnement (12) de l'actionneur (13), et que l'actionneur (13) possède sur le côté opposé aux lames à ressort (10, 11) une rainure (14) pour son positionnement sur le ressort à boudin (8, 15).

2. Crochet commutateur selon la revendication 1, caractérisé en ce que plusieurs ressorts à boudin (8) ainsi que les ressorts de contact extérieurs (7) sont reliés entre eux à la façon d'un peigne par l'intermédiaire d'une pièce découpée qui soit de préférence sectionnable après le montage et que l'actionneur (13) aussi est construit sous forme de pièce en matière plastique ayant l'apparence d'un peigne.

3. Crochet commutateur selon les revendications 1 et 2, caractérisé en ce que les ressorts à boudin (8) et les ressorts de contact extérieurs sont automatiquement guidés, de par la forme du plastique, dans les chambres (2) d'un socle (1), les ressorts de contact extérieurs (7) étant disposés contre la paroi intérieure du socle (1) et possédant une tension initiale ainsi que des pointes (5) courbées vers l'extérieur, lesquelles s'enfoncent dans les évidements (6) correspondants du socle (1).

4. Crochet commutateur selon les revendications 1 à 3, caractérisé en ce que la bascule de commutation (17) présente des trous (19) et que le socle (1) possède des chevilles (18) qui pénètrent dans ces trous, les parois latérales (20) de la bascule de commutation (17) étant dotées d'une construction élastique.

5. Crochet commutateur selon les revendications 1 à 4, caractérisé en ce que la bascule de commutation (17) possède des rainures (22) dans lesquelles viennent en prise, guidés par un relief, les doigts (23) correspondants de l'actionneur (13) lorsque la bascule de commutation (17) est fixée sur le socle (1).

6. Crochet commutateur selon les revendications 1 à 4, caractérisé en ce que les points d'appui inférieurs (14, 15) des ressorts à boudin (8) sont situés dans l'axe des points d'appui (18, 19) de la bascule de commutation.

7. Crochet commutateur selon les revendications 1 à 4, caractérisé en ce que le socle (1) est doté de parois de soutien (25) pour le renforcement des parois latérales et que les parois de soutien (25) possèdent en leur partie inférieure des trous (26) permettant la fixation sur une plaque de base (27) constituée de préférence par une carte imprimée.

8. Crochet commutateur selon les revendications 1 et 4, caractérisé en ce que la bascule de commutation (17) est équipée de pivots (29) sur lesquels est fixé un ressort à torsion (28) permettant le retour de la bascule de commutation.

9. Crochet commutateur selon les revendications 1 et 4, caractérisé en ce que des parois (30) ont été moulées par injection sur la bascule de commutation (17) et que ces parois recouvrent tout au moins partiellement les fentes ménagées en vue d'assurer l'élasticité des parois latérales (20).

# Fig. 1

# Fig. 3

# Fig. 2